# EUROPEAN PATENT APPLICATION

(11) **EP 0 783 131 A2**
(43) Date of publication of application: **09.07.1997**
(21) Application number: 97103291.7
(22) Date of filing: 15.07.1993
(51) Int. Cl.: G03B 17/30, G03B 17/26

(54) **Method of assembling a a photographic film casette**

(30) Priority: 16.07.1992 JP 189731/92
(62) Divisional of application: 93111378.1
(71) Applicant: Fuji Photo Film Co., Ltd., Kanagawa-ken (JP)
(72) Inventor: Esaki, Toshiro, Minami-Ashigara-shi, Kanagawa-ken (JP); Suzuki, Mituru, Minami-Ashigara-shi, Kanagawa-ken (JP); Sato, Susumu, Minami-Ashigara-shi, Kanagawa-ken (JP); Takahashi, Koich, Minami-Ashigara-shi, Kanagawa-ken (JP); Simizu, Makoto, Minami-Ashigara-shi, Kanagawa-ken (JP)
(74) Representative: Grünecker, Kinkeldey, Stockmair & Schwanhäusser Anwaltssozietät

(57) **Abstract**

A method for assembling a photographic film cassette (10,60) is described, reducing ineffective processes in the darkroom. The photographic film cassette used for that method has a cassette shell (11,61), consisting of two plastic shell halves (11a,11b,61a,61b) and a rotatable spool (15) with a photographic film (13) wound thereon, said spool (15) having a cylindrical core (16) axially extending between a pair of flanges(18), wherein a leading end of said photographic film (13) is advanced out of said cassette shell (11,61) through a film passage mouth (14) formed in said cassette shell (11,61) by rotation of said spool (15). The method comprises the steps of mounting a film connecting sheet (17) on said core (16), said film connection sheet (17) having a width approximately equal to that of said photographic filmstrip (13), joining said plastic shell halves (11a,11b,61a,61b) to one another to form said shell (11,61) after having inserted said spool (15) therebetween with a free end (17c) of said film connecting sheet (17) projecting from said film passage mouth (14) to the outside of said cassette shell (11,61); connecting a trailing end (13a) of said photographic film (13) to said free end (17c) of said film connecting sheet (17); and winding said film connecting sheet (17) together with said photographic film (13) completely in said cassette shell (11,61) and onto said core (16) by rotating said spool (15), with said film connecting sheet (17) extending from one of said pair of flanges (18) to the other of said pair of flanges (18).

## Description

The present invention relates to a method for assembling a photographic film cassette.

A method for assembling photographic film cassette is described in later published EP543182 A1. The trailing end portion of the photographic film has a pair of identical holes formed therein. The core of the spool has corresponding hook portions adapted to engage the holes of the trailing end portion of the film strip, so that the photographic film can be wound on the core by rotating the spool.

WO91/11383 describes a strip material dispenser comprising a core for winding. The core has two lateral spindles which are coaxially aligned and are arranged spaced with respect to each other. Within the space a spindle of smaller diameter is arranged, connecting the two lateral spindles to each other. The spindle of smaller diameter is arranged offset with respect to the aligned axis of the two lateral spindles, so that when rotating the spool the smaller spindle circumscribes a circle around the axis of the core. The strip material is provided with a leader having a width smaller than or equal to the length of the smaller spindle. The leader is attached to the smaller spindle, and the core is rotated to wound at first the leader around the smaller spindle and thereafter the strip material onto the lateral spindles. The smaller width of the leader compared to the width of the strip material may cause wrinkling of the leader if the spool and the strip are not held exactly perpendicular to each other. Due to the eccentric arrangement of smaller spindle with respect to the spool more of the length of the leader will be drawn into the cassette shell then may be convoluted onto the smaller spindle, so that the leader could not be closely wound onto the smaller spindle. This also increases the danger of wrinkling.

GB-A-52-77723 describes a method for winding a film strip onto the spool of a film cassette using a flexible guide band piece. The flexible guide band piece is releasibly attached to the spool and protrudes out of the passage mouth of the cassette shell. The film is inserted along the upper surface of the guide band piece and is thereafter attached to the spool. Thereafter, the film, together with the guide band piece, is wound onto the spool.

EP442501 A3 describes the photographic film cassette for containing a photographic film wound around a spool, arranged in a cassette shell in light-tight manner. Rotation of the spool causes a film leader to advance out of the cassette shell. The shell has to two shell halves each moulded from plastic.

There further have been proposed photographic film cassettes, wherein an entire photographic film is preliminarily contained within a plastic cassette shell in an unused state, as disclosed in e.g. US-A-4,834,306. The leading end of the photographic film is advanced out of the cassette shell by rotating a spool. In order to assemble such a photographic film cassette, the photographic film is first wound completely on the spool in a darkroom, all of which are then accommodated in between two cassette shell halves constituting the cassette shell. Thereafter, the joint of the shell halves made of a resin material is secured by ultrasonic wave.

Thus, the ultrasonic welding is indispensable to attach the plastic shell halves since plastic has a low degree of heat tolerance. However, during the ultrasonic welding, vibrations are generated due to the ultrasonic wave, which causes the photographic film to be scratched. Also, if an assembling machine is to get out of order, it takes much time to analyse its cause as well as to repair the assembling machine in a dark room compared with a lighted room, resulting in reduction of operation efficiency and increase of burden to the operator. If the darkroom is switched to be lighted for analyses and repair, a lot of photographic films put in the assembly line will be damaged.

In view of the foregoing, a primary object of the present invention is to provide a method of assembling a photographic film cassette wherein ineffective process in the darkroom can be reduced.

To achieve the above and other objects the method of claim 1 is provided. According to an assembling method of the present invention, shell halves are joined together, for example, by ultrasonic welding, to form a cassette shell, while accommodating a spool in the cassette shell and, thereafter, the cassette shell is transported in a dark room, wherein a strip of photographic film is connected to the spool and wound about the spool by rotating the spool.

According to the invention, a film connection sheet is secured to the spool and, thereafter, the spool is mounted in the cassette shell, while a free end of the film connection sheet is placed outside the cassette shell through a film passage mouth of the cassette shell. The photographic film is attached to the free end of the film connection sheet to be wound about the spool when assembling the photographic film cassette.

In this way, such process that must be performed in the dark room is reduced.

The foregoing objects and advantages of this invention will become apparent to the person skilled in the art from the following detailed description of the invention when read in conjunction with the accompanying drawings, in which:
Fig. 1 is an exploded perspective view illustrating a photographic film cassette of an embodiment according to the present invention;
Fig. 2 is a schematical view illustrating an assembling system for assembling the photographic film unit in Fig. 1; and
Fig. 3 is a perspective view illustrating a photographic film cassette whose cassette shell halves are fixedly engaged with each other before welding.

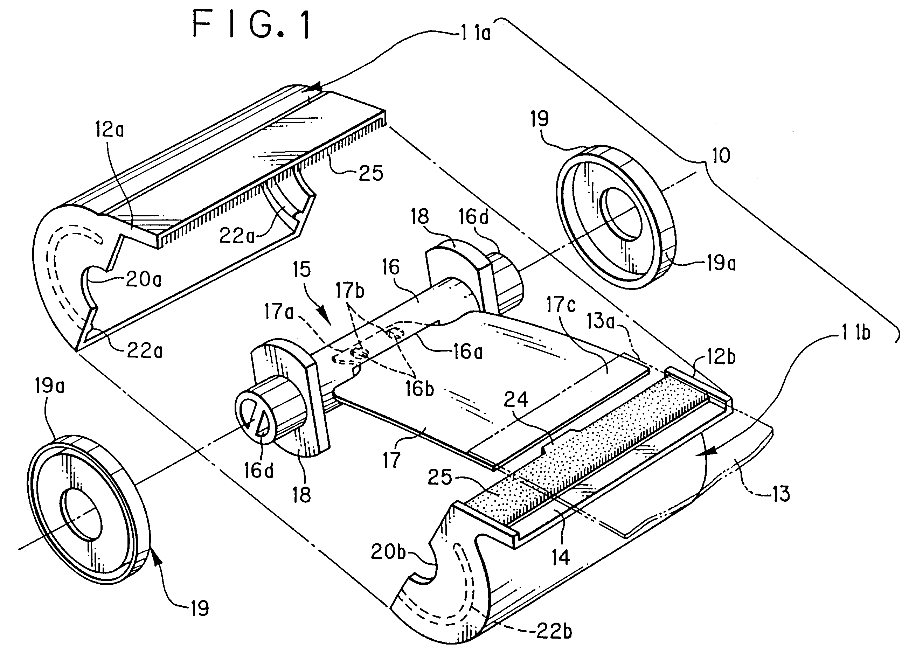

Referring to Fig. 1, a photographic film cassette 10 has a cassette shell 11 consisting of upper and lower shell halves 11a and 11b which are attached by ultrasonic welding. The upper and lower shell halves 11a and 11b have integrally formed respective port portions 12a and 12b which are mated together to form a film passage mouth 14 of the cassette shell 11, through which a photographic film 13 is let in and out of the cassette shell 11.

Inside the cassette shell 11 is provided rotatably a spool 15 having a core 16 and a pair of flanges 18. The core 16 is formed with a slit 16a having therein a pair of claws 16b. A trailing end 17a of a leader sheet 17 is secured to the core 16 through engagement between the claws 16b and holes 17b formed in the trailing end 17a. A trailing end 13a of the photographic film 13 is attached to a free end 17c of the leader sheet 17. The leader sheet 17 is formed of e.g., polysthyrene terephthalate and its length is predetermined such that the free end 17c of the leader sheet 17 slightly protrudes, e.g., about 15 mm, to the outside of the film passage mouth 14 when the shell halves 11a and 11b are jointed together after the spool 15 is accommodated therein. The flanges 18 are formed on both end portions of the core 16 and serve to prevent the photographic film 13 from loosening with its lateral edges being rubbed against the inner surfaces of the flanges 18 when the photographic film 13 is wound on the core 16. Further, flexible plastic disks 19 are rotatably fitted on the core 16 at axially outside portions relative to the flanges 18. The disks 19 are formed integrally with circumferential ridges 19a.

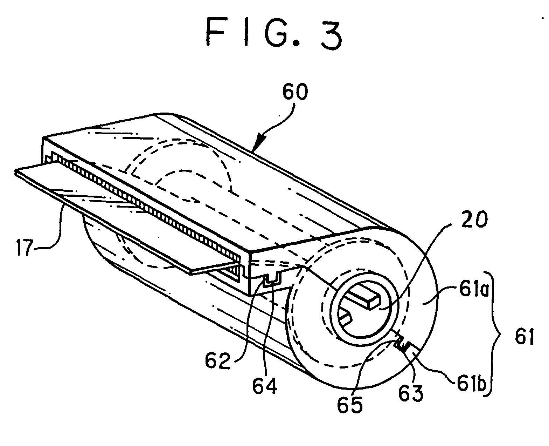

Lateral end surfaces of the upper and lower shell halves 11a and 11b are provided with semicircular cut-outs 20a and 20b which form circular openings 20 (Fig. 3) for exposing end surfaces 16d of the core 16 to the outside when the upper and lower shell halves are joined together. Annular ridges 22a and 22b are formed on the lateral inside end surfaces of the upper and lower shell halves 11a and 11b so as to project inwardly to position the disks 19 such that they will not move in the axial direction of the spool 15. But, the ridges 22a and 22b are not formed in the vicinity of the port portions 12a and 12b. A separation claw 24 is formed on an innermost part of the port portion 12b of the lower shell half 11b to peel a leading end of the photographic film 13 off from the roll of photographic film 13 and to lead it toward the film passage mouth 14 as the spool 15 is rotated together with the photographic film 13. The inside surfaces of the port portions 12a and 12b have light-trapping pieces 25 attached thereto.

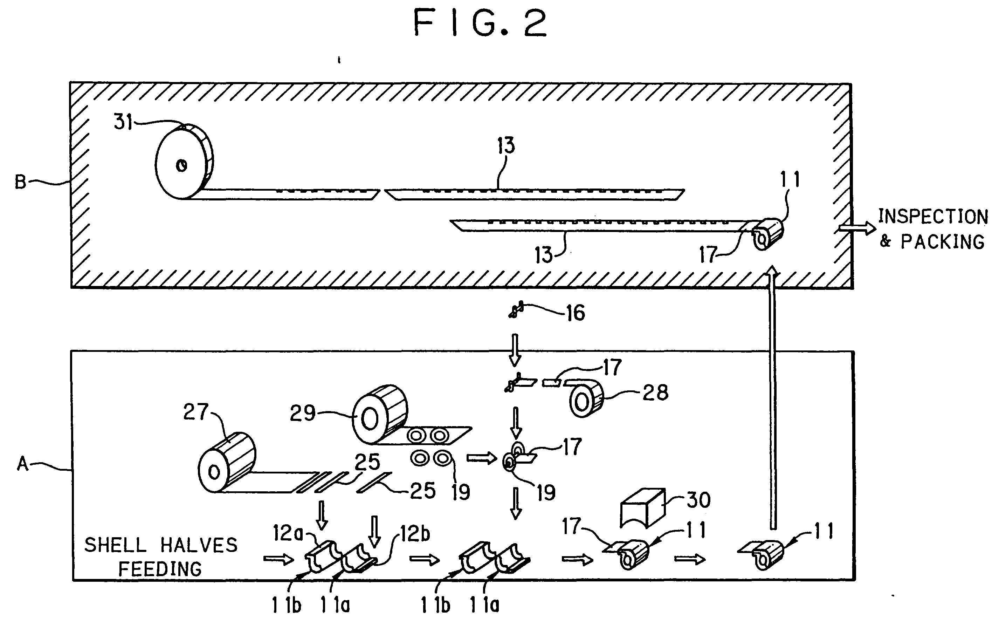

Assembling processes of the photographic film cassette 10 will be described with reference to Fig. 2. In a lighted room as indicated by Block A, the cassette shell halves 11a and 11b are first placed on an assembly line. Then, the light-trapping pieces 25 are cut from a long sheet of light-trapping material 27 wound in a roll, and attached to the port portions 12a and 12b of the cassette shell halves 11a and 11b. In the meantime, the leader sheet 17 is cut at the predetermined length from a continuous roll of leader sheet material 28, inserted in the slit 16a, and secured to the spool 15 via the claws 16b formed within the slit 16a. Next, the disks 19 are formed from a long sheet of disk material 29 wound in a roll, and freely mounted on the both end portions of the core 16. Then, after the spool 15 is put in between the shell halves 11a and 11b with the free end 17c of the leader sheet 17 being slightly projected from the film passage mouth 14, the shell halves 11a and 11b are mated to each other and securely attached by ultrasonic welding using an ultrasonic welding horn 30.

Thereafter, the cassette shell 11 with the leader sheet 17 projected from the film passage mouth 14 are transferred to a darkroom as indicated by Block B. In there, the photographic film 13 is cut at a predetermined length from a long roll of photographic film 31. The trailing end 13c of the photographic film 13 is attached to the free end 17c of the leader sheet 17 projected from the film passage mouth 14 by e.g., a double-coated tape or an adhesive. Then, the entire length of the photographic film 13 is wound in the cassette shell 11 by rotation of the spool 15 resulting in completion of the photographic film cassette 10. Thereafter, the photographic film cassette 10 is again transferred to the lighted room, and subjected to inspection and packaging operations. Thereafter, the photographic film cassettes 10 are shipped to various places. It is to be noted that the leader sheet 17 may be formed integrally with the spool 15.

Fig. 3 shows another embodiment of a photographic film cassette 60, wherein upper and lower shell halves 61a and 61b constituting a cassette shell 61 is prevented from the displacement during the ultrasonic welding. The upper shell half 61a is provided with projections 62 and 63 while the lower shell half 61b is provided with cut-outs 64 and 65 at corresponding portions to the projections 62 and 63. Further, e.g., the projections 62 and 63 are provided at their inner portions with claws while the cut-outs 64 and 65 are provided at corresponding portions to the claws with recesses. Accordingly, the upper and lower shell halves 61a and 61b can be fixedly mated together by fitting the projections 62 and 63 in the respective cut-outs 64 and 65.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, as defined by the appended claims, they should be constructed as included therein.

## Claims

1. A method for assembling a photographic film cassette (10,60) having a cassette shell (11,61) consisting of two plastic shell halves (11a,11b,61a,61b) and a rotatable spool (15) with a photographic film (13) wound thereon, said spool (15) having a cylindrical core (16) axially extending between a pair of flanges(18), wherein a leading end of said photographic film (13) is advanced out of said cassette shell (11,61) through a film passage mouth (14) formed in said cassette shell (11,61) by rotation of said spool (15), said method comprising the steps of:
mounting a film connecting sheet (17) on said core (16), said film connection sheet (17) having a width approximately equal to that of said photographic filmstrip (13), joining said plastic shell halves (11a,11b,61a,61b) to one another to form said shell (11,61) after having inserted said spool (15) therebetween with a free end (17c) of said film connecting sheet (17) projecting from said film passage mouth (14) to the outside of said cassette shell (11,61); connecting a trailing end (13a) of said photographic film (13) to said free end (17c) of said film connecting sheet (17); and winding said film connecting sheet (17) together with said photographic film (13) completely in said cassette shell (11,61) and onto said core (16) by rotating said spool (15), with said film connecting sheet (17) extending from one of said pair of flanges (18) to the other of said pair of flanges (18).

2. A method as recited in claim 1, wherein said joining step comprises the steps of: mating said shell halves (11a,11b,61a,61b) together; and thereafter securing joints of said shell halves by ultrasonic welding.

3. A method as recited in claim 1 or 2, wherein said shell halves (61a,61b) are fixedly mated together through engagement (62,63,64,65).

4. A method as recited in any one of claims 1 to 3, wherein said film connection sheet (17) is secured to said spool (15) through engagement.

5. A method as recited in claim 4, wherein a slit (16a) is formed in said spool in an axial direction of said spool (15); at least a claw (16b) is formed inside said slit; and said film connection sheet (17) is secured at one end (17a) to said spool (15) through engagement with said claw (16b).

6. A method as recited in any one of claims 1 to 5, wherein said trailing end (13a) of said photographic filmstrip (13) is attached to said free end (17c) of said film connection sheet (17) through adhesive bonding.

7. A method as recited in any one of claims 3 to 6, wherein projections (62,63) are formed in one (61a) of said shell halves, and cut-outs (64,65) are formed in the other (61b) of said shell halves in correspondence with said projections, said projections being fitted in said cut-outs to provide a fixed engagement between said shell halves.

8. A method as recited in any one of claims 1 to 7, wherein said film connection sheet (17) is made of polystyrene terephthalate.

9. A method as recited in claim 12, wherein said film connection sheet has a length that said free end (17c) of said film connection sheet (17) protrudes about 15mm outside from said film passage mouth (14).
